# FASCICULE DE BREVET EUROPEEN

(11) **EP 3 201 508 B1**
(45) Date de publication et mention de la délivrance du brevet: **23.10.2019**
(21) Numéro de dépôt: 15728830.9
(22) Date de dépôt: 09.06.2015
(51) Int. Cl.: F16L 21/00, F16L 23/028, F16L 25/12, F16L 27/107

(54) **DISPOSITIF ET PROCÉDÉ DE FIXATION D'UN ÉLÉMENT DE CANALISATION À UNE EXTRÉMITÉ DE CANALISATION.**
VORRICHTUNG UND VERFAHREN ZUR BEFESTIGUNG EINES ROHRELEMENTS AN EIN ROHRENDE
DEVICE AND METHOD FOR ATTACHING A PIPE ELEMENT TO A PIPE END

(30) Priorité: 30.09.2014 CH 14822014
(43) Date de publication de la demande: 09.08.2017
(73) Titulaire: Burgener AG, 3930 Visp (CH)
(72) Inventeur: IMOBERDORF, Remo, 3904 Naters (CH); BURGENER, Walter, 3930 Visp (CH)
(74) Mandataire: P&TS SA (AG, Ltd.)
(86) Numéro de dépôt international: PCT/EP2015/062849
(87) Numéro de publication internationale: WO 2016/050373

(56) Documents cités:
- EP-A1- 2 228 323
- DE-A1- 10 245 477
- US-A- 2 443 187
- US-A- 3 628 815

## Description

### Domaine technique

La présente invention concerne un dispositif de fixation d'un élément de canalisation à une extrémité de canalisation. La présente invention concerne également un procédé pour fixer un élément de canalisation à une extrémité de canalisation.

### Etat de la technique

Des dispositifs de fixation d'un élément de canalisation à une extrémité de canalisation sont connus.

Dans le contexte de l'invention, l'expression « élément de canalisation » désigne un élément qui permet de recevoir et canaliser un matériau tel qu'un solide, un liquide ou un gaz. Par exemple, l'élément de canalisation est un tuyau, qui permet de transporter des granulés, par exemple et de façon non limitative des composés pour des médicaments, ou bien des médicaments. Dans une variante préférentielle cet élément de canalisation est flexible. Dans une autre variante préférentielle, l'élément de canalisation a une forme sensiblement cylindrique.

Dans le contexte de l'invention, l'expression « extrémité de canalisation » désigne une pièce appartenant à une machine, ou en général à une installation, ou pouvant être reliée de façon amovible ou inamovible à une machine ou installation, et définissant une ouverture traversante qui permet le passage d'un matériau tel qu'un solide, un liquide ou un gaz depuis la machine vers l'élément de canalisation.

L'élément de canalisation, par exemple un tuyau, a généralement deux extrémités. Il peut être fixé à l'extrémité de canalisation en correspondance d'une seule extrémité, ou bien en correspondance de ses deux extrémités.

Lors de la fixation d'un élément de canalisation à une extrémité de canalisation, il est important de garantir que le matériau qui traverse l'élément de canalisation, et aussi la poussière éventuellement générée par ce matériau ou en général de la saleté, ne sorte pas de l'élément de canalisation en correspondance de cette fixation. Il est important aussi de garantir que des substances externes à l'élément de canalisation et/ou à l'extrémité de canalisation ne puissent pas y entrer.

En effet cette fixation d'un élément de canalisation à une extrémité de canalisation doit être la plus étanche possible, de façon à réduire voir éviter toute fuite ou contamination en correspondance de ce point de passage entre l'élément de canalisation et l'extrémité de canalisation, ce qui est très important notamment dans le domaine de l'industrie pharmaceutique dans lequel des normes et règles de qualité très élevées sont présentes.

Il est connu de fixer l'élément de canalisation à l'extrémité de canalisation par une simple bride, notamment par une bride en forme d'anneau qui serre à l'aide d'une vis l'élément de canalisation à l'extrémité de canalisation. Cette solution présente certains désavantages, dont le principal est lié au manque d'étanchéité de cette fixation : le matériau qui passe de l'élément de canalisation à l'extrémité de canalisation ou vice-versa peut sortir en correspondance de cette fixation.

EP2228323 (Zimmermann) décrit un dispositif de fixation comprenant une manchette déformable et une bride à laquelle est fixée une monture assignée à cette manchette, et qui est reliée de façon amovible à une aile annulaire. Ce dispositif nécessite un élément de canalisation modifié, ayant notamment des extrémités se présentant comme un rebord de type bourrelet, pour pouvoir coopérer avec des protubérances périphériques de la manchette. En outre le dispositif comprend un nombre important de pièces (manchette, monture, bride, aile annulaire, vis, etc.), et son montage s'avère compliqué en pratique.

US3628815 se rapporte à un dispositif de fixation entre une première canalisation à simple paroi et une deuxième canalisation à double paroi, comprenant deux anneaux de serrage reliés par une liaison filetée et qui coopèrent avec une extrémité conique de la première canalisation, un joint de forme spécifique et une extrémité conique d'une pièce tubulaire intermédiaire montée sur la deuxième canalisation. Ce montage est également compliqué.

DE10245477 décrit un dispositif de fixation comprenant un tube de liaison reçu dans les portions d'extrémité des deux canalisations à relier, lesquelles présentent un profil modifié pour d'une part se conformer au profil extérieure de ce tube de liaison et d'autre part être reçues dans le logement annulaire délimité entre deux éléments de fixation attachés ensemble par une liaison filetée. Cette technique exige donc un profil complexe pour les portions d'extrémité des deux canalisations à relier.

US2443187 concerne un dispositif de fixation dans lequel l'extrémité de la canalisation est montée dans un logement de forme complémentaire d'une extrémité de canalisation avec un profil doublement conique. Il s'agit d'un montage avec des formes précises et complexes.

### Bref résumé de l'invention

Un but de la présente invention est de proposer un dispositif de fixation d'un élément de canalisation à une extrémité de canalisation exempt des limitations des dispositifs connus.

Un autre but de l'invention est de proposer un dispositif de fixation d'un élément de canalisation à une extrémité de canalisation qui permet une étanchéité en correspondance de cette fixation qui soit améliorée par rapport aux solutions existantes.

Un autre but de l'invention est de proposer un dispositif de fixation d'un élément de canalisation à une extrémité de canalisation qui puisse être utilisé avec n'importe quel type d'élément de canalisation.

Un autre but de l'invention est de proposer un procédé de fixation d'un élément de canalisation à une extrémité de canalisation qui soit plus simple et facile à réaliser par rapport aux procédés connus.

En outre, à cause des mouvements permanents entre les deux extrémités de canalisation auxquelles l'élément de canalisation peut être relié, il existe un risque important de microfissures ou de fissures de l'élément de canalisation, ce qui peut impliquer la sortie du matériau qui traverse l'élément de canalisation au dehors de celui-ci.

Un autre but de l'invention est d'améliorer la sécurité des dispositifs de fixation d'un élément de canalisation à une extrémité de canalisation, en réduisant voir empêchant la sortie du matériau au dehors de l'élément de canalisation décrit ci-dessus.

Ces buts sont atteints par le système selon l'invention. L'invention est le système de fixation d'un élément de canalisation à une extrémité de canalisation tel que défini par la revendication 1.

Des caractéristiques optionnelles de l'invention sont définies par les revendications dépendantes.

Le pliage du système revendiqué permet que le matériau transporté à l'intérieur de l'élément de canalisation (ou bien la poussière générée par ce matériau, ou en général de la saleté) ne puisse pas sortir en correspondance de la fixation de l'élément de canalisation à l'extrémité de canalisation. Ce pliage permet également que de la saleté externe ne puisse pas entrer dans l'élément de canalisation en correspondance de cette fixation.

Le dispositif selon l'invention peut être utilisé avec n'importe quel type d'élément de canalisation.

Dans une variante, le premier élément de fixation et le deuxième élément de fixation sont arrangés de façon à ce qu'une fois connectés par les moyens de connexion, ils définissent également un espace arrangé pour recevoir un joint.

Dans une variante, le dispositif selon l'invention comprend aussi ce joint. Dans une variante ce joint est un joint de type « O-Ring ». Ce joint permet d'exercer une force de compression sur l'élément de canalisation qui est dirigée vers la partie interne de l'élément de canalisation destiné au transport d'un matériau, de façon à mieux le fixer à l'extrémité de canalisation. Ce type de joint permet également d'améliorer encore plus l'étanchéité du dispositif selon l'invention.

Dans une variante, le premier élément de fixation comprend une bride.

Dans une autre variante, le premier élément de fixation comprend deux demi-brides et des moyens de connexion des deux demi-brides.

Dans une variante, le deuxième élément de fixation comprend un anneau.

La présente invention concerne également un procédé de fixation d'un élément de canalisation à une extrémité de canalisation, selon la revendication 12.

Selon un aspect additionnel de l'invention, le dispositif de fixation comprend un deuxième élément de canalisation arrangé pour contenir l'élément de canalisation principal, de façon à ce que le contenu de l'élément de canalisation principal qui s'échappe d'une éventuelle fissure de l'élément de canalisation principal reste confiné dans l'espace entre l'élément de canalisation principal et le deuxième élément de canalisation.

Dans une variante, le deuxième élément de canalisation est flexible et/ou transparent.

Dans une autre variante, le deuxième élément de canalisation est relié, par exemple soudé, en correspondance d'au moins une de ses extrémités à un joint.

Dans une autre variante, le deuxième élément de canalisation est fixé au premier et/ou deuxième élément de fixation à l'aide d'un troisième élément de fixation.

### Brève description des figures

Des exemples de mise en œuvre de l'invention sont indiqués dans la description illustrée par les figures annexées dans lesquelles :
La figure 1 illustre une vue de coupe d'un mode de réalisation d'un dispositif de fixation d'un élément de canalisation à une extrémité de canalisation selon l'invention.
La figure 2 illustre une vue en perspective d'un mode de réalisation d'un dispositif de fixation selon l'invention, de l'élément de canalisation et de l'extrémité de canalisation, avant le montage du dispositif.
Les figures 3A et 3B illustrent une vue de coupe partielle du premier élément de fixation et du deuxième élément de fixation d'un mode de réalisation d'un dispositif de fixation selon l'invention, avant respectivement après leur connexion.
La figure 4 illustre un mode de réalisation de l'espace formé par le premier élément de fixation et le deuxième élément de fixation une fois connectés.
Les figures 5A à 5D illustrent un mode de réalisation des étapes du procédé pour fixer l'élément de canalisation à l'extrémité de canalisation selon un mode de réalisation de l'invention.
La figure 6 illustre sur sa partie gauche une vue de coupe du mode de réalisation d'un dispositif de fixation d'un élément de canalisation à une extrémité de canalisation selon la figure 1, et sur sa partie droite une vue de coupe d'un autre mode de réalisation d'un dispositif de fixation d'un élément de canalisation à une extrémité de canalisation selon l'invention.

### Exemple(s) de mode(s) de réalisation de l'invention

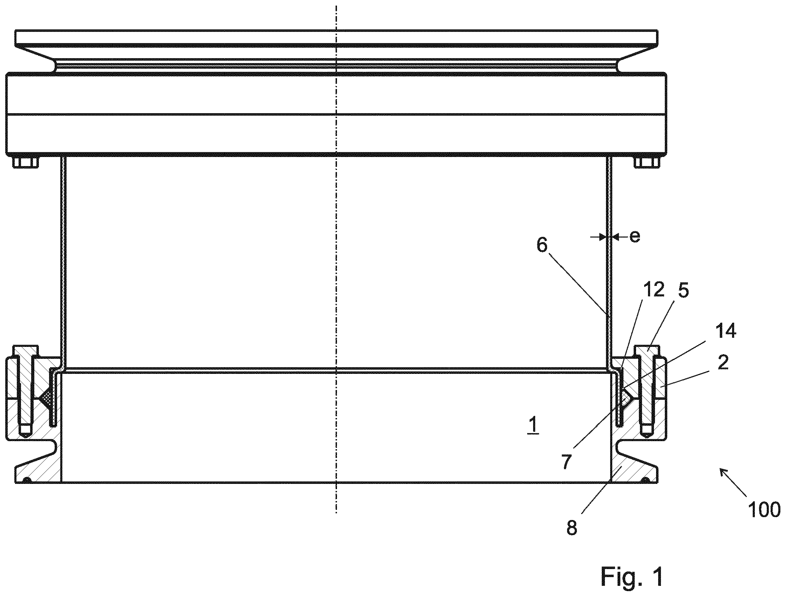

La figure 1 illustre une vue de coupe d'un dispositif de fixation 100 d'un élément de canalisation 6 à une extrémité de canalisation 1 selon l'invention.

Le dispositif 100 selon l'invention permet de fixer l'élément de canalisation 6 à l'extrémité de canalisation 1. Il comprend :
- au moins un premier élément de fixation 2,
- un deuxième élément de fixation 8
- des moyens de connexion 5 du premier élément de fixation 2 au deuxième élément de fixation 8.

Dans l'exemple illustré, ces moyens de connexion 5 sont des vis, mais tout autre moyen de fixation, notamment tout autre moyen de fixation amovible, peut être aisément imaginé par un homme du métier, par exemple et de façon non limitative une goupille, de la colle, un adhésif, etc. L'utilisation d'une vis permet cependant une force de serrage de l'élément de canalisation 6 à l'extrémité de canalisation 1 plus grande et mieux maitrisable que d'autres moyens de connexion possibles.

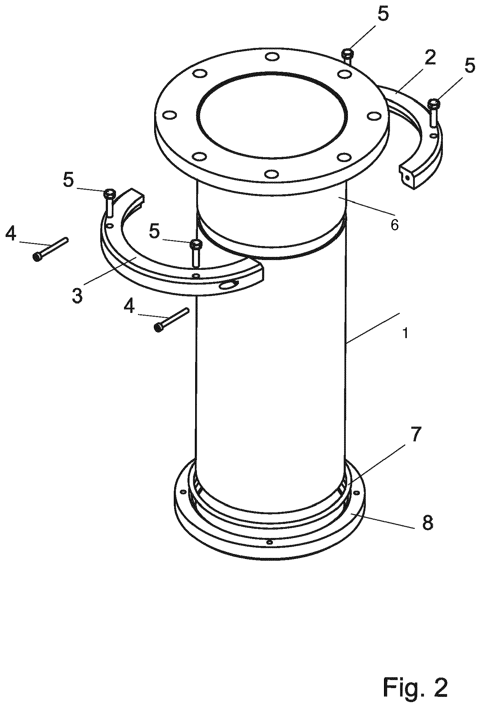

La figure 2 illustre une vue en perspective du dispositif 100 selon un mode de réalisation de l'invention, de l'élément de canalisation 6 et de l'extrémité de canalisation 1, avant le montage du dispositif 100.

Dans la variante illustrée, le premier élément de fixation comprend deux demi-brides 2, 3, chaque demi-bride ayant une forme en demi-cercle, qui peuvent être connectées entre elles par des moyens de connexion 4, par exemple et de façon non limitative des vis 4.

Il faut cependant noter que le premier élément de fixation peut être constitué d'une seule pièce, par exemple une bride sensiblement circulaire, ou bien d'un nombre de pièces supérieur à deux.

Dans l'exemple illustré, une fois connectées à l'aide des vis 4 ou de tout autre moyen de connexion, les deux demi-brides 2, 3 forment un anneau ayant un diamètre interne légèrement plus grand du diamètre externe de l'extrémité de canalisation 1, la différence entre les deux diamètres correspondant à l'épaisseur e de l'élément de canalisation 6, visible sur la figure 1, comme on le discutera plus loin.

Dans l'exemple illustré, le deuxième élément de fixation comprend un anneau 8, de forme sensiblement circulaire, et ayant un diamètre interne correspondant au diamètre externe de l'extrémité de canalisation 1, comme visible sur la figure 1. L'anneau 8 de la figure 1 a un diamètre externe correspondant à celui du premier élément de fixation 2, mais cette caractéristique n'est pas essentielle. Dans une autre variante, les diamètres externes et internes du deuxième élément de fixation 8 ne sont pas fixes et peuvent être modifiés par l'utilisateur (par exemple le deuxième élément de fixation 8 peut être formé par deux ou plusieurs pièces connectées de façon télescopique).

Dans une variante préférentielle, les éléments de fixation 2 et 8 sont réalisés en métal. Il faut cependant noter que tout autre matériau, notamment un matériau rigide, peut être utilisé à la place du métal.

Dans l'exemple de la figure 2, le dispositif 100 selon l'invention comprend également un joint 7, par exemple un joint de type « O-Ring ». La fonction de ce joint est celle de mieux fixer l'élément de canalisation 6 à l'extrémité de canalisation 1, en exerçant une force de compression dirigée vers la partie interne de l'élément de canalisation 6 destinée au transport d'un matériau. Ce type de joint 7 permet également d'améliorer encore plus l'étanchéité du dispositif 100 selon l'invention.

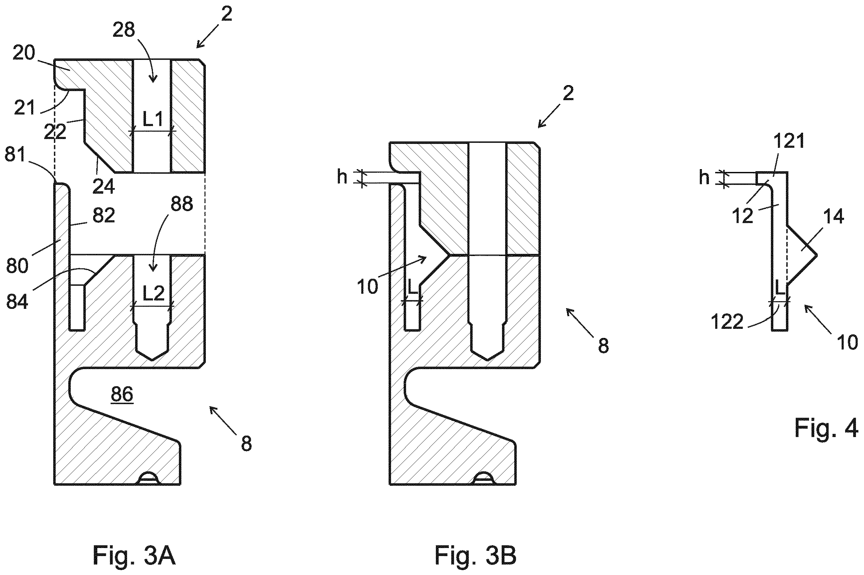

Les figures 3A et 3B illustrent une vue de coupe partielle du premier élément de fixation 2 et du deuxième élément de fixation 8 avant respectivement après leur connexion. Pour simplicité, les moyens de connexion 5 entre le premier élément de fixation 2 et le deuxième élément de fixation 8 ne sont pas illustrés. La vue est partielle car elle correspond à une partie seulement de ces éléments 2, 8. Elle correspond notamment à ce qui est visible sur la figure 1 en bas à droite, l'autre partie (illustrée sur la figure 1 en bas à gauche) étant symétrique à celle qui sera discutée en références aux figures 3A et 3B.

Comme visible sur la figure 3B, le premier élément de fixation 2 et le deuxième élément de fixation 8 sont arrangés de sorte qu'une fois connectés, ils définissent un espace 10. Cet espace 10 est arrangé pour recevoir une partie de l'élément de canalisation 6 et également un joint 7, comme visible sur la figure 1. Cet espace 10 est illustré sur la figure 4 et comprend notamment une partie sensiblement en forme de « L » 12, et une partie sensiblement triangulaire 14.

La partie en forme de « L » 12 comprend une première partie 121, et une deuxième partie 122 sensiblement perpendiculaire à la première partie 121. Dans la variante de la figure 4, la première partie 121 est sensiblement horizontale, et la deuxième partie 122 sensiblement verticale. La partie en forme de « L » 12 est arrangée pour recevoir une partie de l'élément de canalisation 6, notamment l'une de ses extrémités. En effet, la hauteur h de la première partie 121 et la largeur L de la deuxième partie 122 sont égales et sont légèrement plus grandes de l'épaisseur e de l'élément de canalisation 6, visible sur la figure 1. Dans le contexte de cette invention, l'expression « légèrement plus grandes » indique que la hauteur h et la largeur L doivent permettre d'une part le passage de l'élément de canalisation 6, mais de l'autre part éviter que l'élément de canalisation 6 puisse bouger ou se déplacer une fois inséré dans la partie en forme de « L » 12 de l'ouverture 10. Par exemple le rapport entre la hauteur h (ou la largeur L) et l'épaisseur e est inférieur à 1,1.

Il faut noter que la partie en forme de « L » 12 de l'ouverture 10 est configurée en sorte que la partie de l'élément de canalisation 6 qui est insérée dans cette ouverture ou espace 10 doit être pliée pour pouvoir être reçue. La partie de l'élément de canalisation 6 qui est insérée dans cette ouverture ou espace 10 est pliée de 90° par rapport à la partie de l'élément de canalisation 6 externe au dispositif 100 selon l'invention.

Pour ce faire et comme illustré sur la figure 3A, le premier élément de fixation 2 comprend une surface 21 sensiblement horizontale qui définit ensemble à la surface correspondante 81 sensiblement horizontale du deuxième élément de fixation 8 la première partie 121 de l'ouverture 10. Le premier élément de fixation 2 comprend également une surface 22 sensiblement verticale, et donc perpendiculaire à la surface 21, qui définit ensemble à la surface 82 sensiblement verticale du deuxième élément de fixation la deuxième partie 122 de l'ouverture 10. En d'autres mots, le premier élément de fixation 2 comprend une saillie 20 et le deuxième élément de fixation 8 comprend une saillie 80 qui permettent la réalisation de la partie en forme de « L » 12 de l'ouverture 10, de façon à ce que l'élément de canalisation 6 doit être plié pour pouvoir être inséré dans cette ouverture en forme de « L ».

L'angle de 90° permet une étanchéité maximale. En outre la fabrication des éléments de fixation 2 et 8 est plus simple en cas d'un angle de 90°.

Ce pliage de la partie de l'élément de canalisation 6 qui est insérée dans le dispositif 100 selon l'invention permet d'éviter d'une part que le matériau qui passe de l'extrémité de canalisation 1 à l'élément de canalisation 6 (ou vice-versa) puisse sortir en correspondance de la fixation de l'extrémité de canalisation 1 à l'élément de canalisation 6, et de l'autre part que de la saleté externe puisse entrer en correspondance de cette fixation.

Comme visible sur la figure 3A, le premier élément de fixation 2 comprend également une surface 24 qui définit ensemble à la surface 84 correspondante du deuxième élément de fixation 8 la partie 14 de l'ouverture 10 destinée à loger le joint 7.

Comme visible sur la figure 3A, le premier élément de fixation 2 comprend également une ouverture 28 qui ensemble à l'ouverture correspondante 88 du deuxième élément de fixation 8 définit l'espace pour loger la vis 5. Dans une variante préférentielle, la largeur L1 de l'ouverture 28 est égale à la largeur L2 de l'ouverture 88, les deux ouvertures 28, 88 étant parfaitement alignées pour permettre la connexion entre le premier élément de fixation 2 et le deuxième élément de fixation 8. Il faut toutefois comprendre que la présence de ces ouvertures 28, 88 est optionnelle, et que ces ouvertures 28, 88 sont absentes si un autre moyen de connexion 5, par exemple de la colle, est utilisé à la place d'une vis pour connecter le premier élément de fixation 2 au deuxième 8.

Dans la variante de la fig. 3A, l'ouverture 28 est un trou traversant et l'ouverture 88 un trou borgne taraudé. Dans une autre variante (non illustrée) l'ouverture 28 est un trou borgne taraudé et l'ouverture 88 un trou traversant. Dans une autre variante (non illustrée) l'ouverture 28 est un trou traversant et l'ouverture 88 un trou traversant taraudé. Dans une autre variante (non illustrée) l'ouverture 28 est un trou traversant taraudé et l'ouverture 88 un trou traversant. Dans une dernière variante (non illustrée), les deux ouvertures sont des trous traversants non filetés et la connexion entre le premier élément de fixation 2 et le deuxième 8 est garantie à l'aide d'une vis coopérant avec un écrou.

Dans la variante illustrée sur la figure 3A, le deuxième élément de fixation 8 définit une autre ouverture 86, qui n'est pas nécessaire au fonctionnement du dispositif 100 selon l'invention.

Dans la variante de la figure 4, l'ouverture 10 comprend également une partie sensiblement triangulaire 14. Cette partie est arrangée pour recevoir le joint 7, comme visible sur la figure 1. Il faut cependant comprendre que cette partie 14 n'est pas nécessaire au fonctionnement du dispositif 100 selon l'invention. En outre elle ne doit pas être nécessairement triangulaire, mais toute autre forme (demi-cercle, polygone, etc.) peut être utilisée, pour autant qu'elle soit adaptée d'une part à loger le joint 7, et d'autre part à éviter que le joint 7 puisse bouger ou se déplacer une fois inséré dans cette partie 14 de l'ouverture 10.

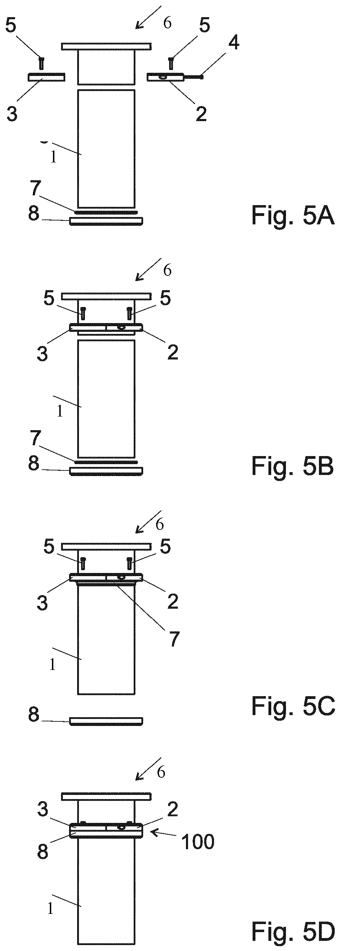

Les figures 5A à 5D illustrent un mode de réalisation des étapes qui permettent de fixer à l'aide du dispositif 100 selon l'invention l'élément de canalisation 6 à l'extrémité de canalisation 1.

La figure 5A illustre les différentes parties d'un mode de réalisation du dispositif 100 selon l'invention, notamment le premier élément de fixation qui dans ce cas comprend deux demi-brides 2, 3, le deuxième élément de fixation 8, le joint 7, les moyens de connexion 4 des deux demi-brides 2, 3 (des vis dans ce cas) et les moyens de connexion 5 du premier élément de fixation 2, 3 avec le deuxième élément de fixation 8 (des vis dans ce cas). La figure 5A illustre aussi l'élément de canalisation 6 et l'extrémité de canalisation 1.

La figure 5B illustre la connexion des demi-brides 2, 3 entre elles et à l'élément de canalisation 6.

Ensuite, comme illustré sur la figure 5C, une partie de l'élément de canalisation 6 est insérée entre le premier élément de fixation 2, 3 et l'extrémité de canalisation 1, et le joint 7 est inséré entre cette partie de l'élément de canalisation 6 et le premier élément de fixation 2, 3.

La figure 5D illustre la connexion entre le premier élément de fixation 2, 3 et le deuxième élément de fixation 8 par les vis 5.

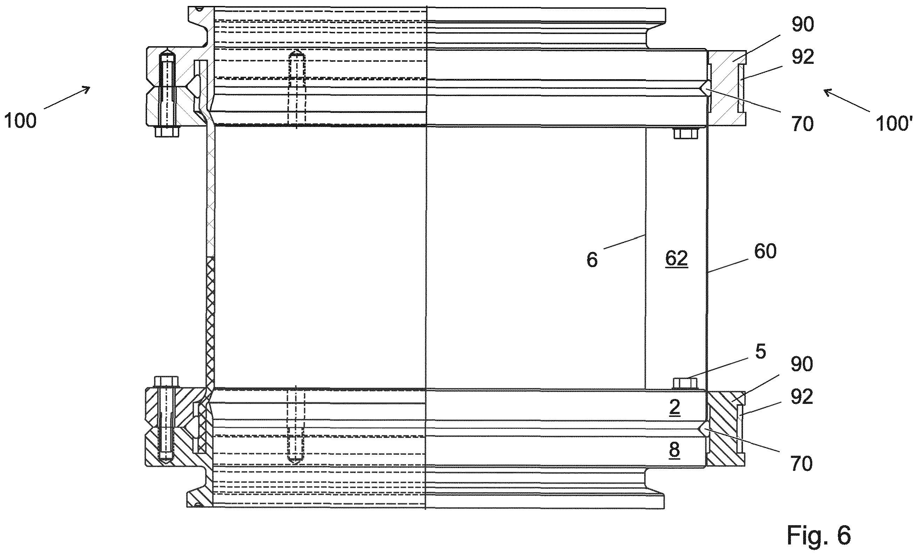

La figure 6 illustre sur sa partie gauche une vue de coupe du mode de réalisation d'un dispositif de fixation 100 d'un élément de canalisation 6 à une extrémité de canalisation 1 selon la figure 1, et sur sa partie droite une vue de coupe d'un autre mode de réalisation d'un dispositif de fixation 100' d'un élément de canalisation à une extrémité de canalisation selon l'invention.

Selon ce nouveau mode de réalisation, le dispositif de fixation 100' comprend un deuxième élément de canalisation 60 qui est externe à l'élément de canalisation 6, c'est-à-dire qu'il contient l'élément de canalisation 6. En effet, si l'élément de canalisation principal 6 est fissuré, par exemple à cause des mouvements permanents entre les deux extrémités de canalisation, le deuxième élément de canalisation 60 constitue une protection qui évite que le contenu de l'élément de canalisation principal 6 puisse s'échapper. En d'autres mots, le deuxième élément de canalisation 60 constitue une sécurité ultérieure.

Dans une variante préférentielle ce deuxième élément de canalisation 60 est flexible, afin de réduire le risque de fissures sur ses parois et augmenter sa résistance aux chocs. Dans une variante préférentielle il est réalisé en matière plastique, sous la forme d'une feuille. Dans une autre variante préférentielle il est réalisé en matière plastique multicouche. Il peut par exemple être réalisé en PE (polyéthylène).

Comme visible sur la fig. 6, ce deuxième élément de canalisation 60 a une hauteur plus grande que celle de l'élément de canalisation principal 6, car il entre en contact avec au moins un élément de fixation 2, 8. Dans l'exemple de la fig. 6, il entre en contact en correspondance de ses deux extrémités au premier élément de fixation 2.

Dans une variante, au moins une extrémité du deuxième élément de canalisation 60 est liée à un joint 70, par exemple un joint « O-Ring », afin de garantir l'étanchéité en correspondance de ces extrémités. Dans une variante préférentielle ce joint 70 est directement soudé au deuxième élément de canalisation 60, afin de simplifier son posage. Dans la variante de la fig. 6, ce joint 70 entre en contact avec la zone en correspondance de laquelle le premier élément de fixation 2 touche le deuxième élément de fixation 8.

Le deuxième élément de canalisation 60 est ensuite fixé au dispositif 100 selon l'invention avec un troisième élément de fixation. Dans la variante de la fig. 6, ce troisième élément de fixation comprend un anneau 90 et une bride de serrage 92, afin d'assurer une meilleure fixation radiale, mais tout autre moyen de fixation peut être utilisé.

Dans une variante préférentielle, ce deuxième élément de canalisation 60 est réalisé dans un matériau transparent : de cette façon un opérateur peut aisément se rendre compte d'une éventuelle fissure ou microfissure de l'élément de canalisation principal 6 car il verra le contenu de l'élément de canalisation principal 6 s'accumuler dans l'espace 62 entre l'élément de canalisation principal 6 et le deuxième élément de canalisation 60.

### Numéros de référence employés sur les figures

- 1: Extrémité de canalisation
- 2: Demi-bride (premier élément de fixation)
- 3: Demi-bride (deuxième élément de fixation)
- 4: Moyen de connexion des deux demi-brides
- 5: Moyen de connexion entre le premier élément de fixation et le deuxième élément de fixation
- 6: Elément de canalisation ou élément de canalisation principal
- 7: Joint
- 8: Deuxième élément de fixation
- 10: Ouverture
- 12: Ouverture en forme de « L »
- 14: Ouverture pour le joint 7
- 20: Saillie du premier élément de fixation
- 21: Surface horizontale du premier élément de fixation
- 22: Surface verticale du premier élément de fixation
- 24: Surface du premier élément de fixation définissant l'ouverture 14
- 28: Ouverture du premier élément de fixation pour recevoir le moyen de connexion 5
- 60: Deuxième élément de canalisation
- 62: Espace entre l'élément de canalisation principal et le deuxième élément de canalisation
- 70: Joint
- 80: Saillie du deuxième élément de fixation
- 81: Surface horizontale du deuxième élément de fixation
- 82: Surface verticale du deuxième élément de fixation
- 84: Surface du deuxième élément de fixation définissant l'ouverture 14
- 86: Ouverture externe du deuxième élément de fixation
- 88: Ouverture du deuxième élément de fixation pour recevoir le moyen de connexion 5
- 90: Anneau
- 92: Bride de serrage
- e: Epaisseur de l'élément de canalisation
- h: Hauteur de la première partie 121 de l'ouverture 12
- L: Largeur de la deuxième partie de l'ouverture 12
- L1: Largeur de l'ouverture 28
- L2: Largeur de l'ouverture 8
- 121: Première partie de l'ouverture 12
- 122: Deuxième partie de l'ouverture 12

## Revendications

1. Système de fixation d'un élément de canalisation (6) à une extrémité de canalisation (1), comprenant :
- l'élément de canalisation (6),
- l'extrémité de canalisation (1),
- un dispositif (100) de fixation dudit élément de canalisation (6) à ladite extrémité de canalisation (1), ledit dispositif (100) comprenant :
- un premier élément de fixation (2, 3)
- un deuxième élément de fixation (8)
- des moyens de connexion (5) du premier élément de fixation (2, 3) au deuxième élément de fixation (8)
ledit premier élément de fixation (2, 3) et ledit deuxième élément de fixation (8) étant arrangés de sorte qu'une fois connectés par lesdits moyens de connexion (5), ils définissent un espace (10) arrangé pour recevoir une partie de l'élément de canalisation (6),ledit espace étant (10) configuré en sorte que ladite partie de l'élément de canalisation (6) doit être pliée pour pouvoir être reçue dans ledit espace (10) ledit espace (10) comprenant une partie en forme de « L » (12) réalisée par une première saillie (20) dudit premier élément de fixation (2) et par une deuxième saillie (80) dudit deuxième élément de fixation (8),ladite partie de l'élément de canalisation (6) étant reçue dans ladite partie en forme de « L » (12)
ladite partie en forme de « L » (12) comprenant une première partie (121) et une deuxième partie (122) sensiblement perpendiculaire à la première partie (121),
le premier élément de fixation (2, 3) et le deuxième élément de fixation (8) étant externes à ladite extrémité de canalisation (1).

2. Système selon la revendication 1, ladite partie en forme de « L » (12) étant configurée en sorte que ladite partie de l'élément de canalisation (6) doit être pliée d'un angle sensiblement égal à 90° pour pouvoir être reçue dans ladite partie en forme de « L » (12), par rapport à la partie de l'élément de canalisation (6) qui n'est pas insérée dans cette partie en forme de « L » (12).

3. Système selon l'une des revendications 1 à 2, ledit premier élément de fixation (2, 3) et ledit deuxième élément de fixation (8) étant arrangés de sorte qu'une fois connectés par lesdits moyens de connexion (5), ils définissent également un espace (14) arrangé pour recevoir un joint (7).

4. Système selon la revendication 3, comprenant un joint (7) reçu dans ledit espace (14).

5. Système selon la revendication 4, ledit joint (7) étant un joint « O-Ring ».

6. Système selon l'une des revendications 1 à 5, ledit premier élément de fixation comprenant deux demi-brides (2, 3) et des moyens de connexion (4) des deux demi-brides (2, 3).

7. Système selon l'une des revendications 1 à 6, ledit deuxième élément de fixation (8) comprenant un anneau.

8. Système selon l'une des revendications 1 à 7, ledit élément de canalisation (6) étant un élément de canalisation principal, ledit dispositif comprenant un deuxième élément de canalisation (60) arrangé pour contenir ledit élément de canalisation principal (6), de façon à ce que le contenu dudit élément de canalisation principal (6) qui éventuellement s'échappe dudit élément de canalisation principal (6) reste confiné dans l'espace (62) entre ledit élément de canalisation principal (6) et le deuxième élément de canalisation (60).

9. Système selon la revendication précédente, ledit deuxième élément de canalisation (60) étant flexible et/ou transparent.

10. Système selon l'une des revendications 8 ou 9, ledit deuxième élément de canalisation (60) étant relié, par exemple soudé, en correspondance d'au moins une de ses extrémités à un joint (70).

11. Système selon l'une des revendications 8à 10, comprenant un troisième élément de fixation (90, 92) dudit deuxième élément de canalisation (60) au premier et/ou deuxième élément de fixation (2, 8).

12. Procédé de fixation d'un élément de canalisation (6) à une extrémité de canalisation (1) pour assembler un système selon la revendication 1, comprenant les étapes suivantes :
- connexion d'un premier élément de fixation (2, 3) à ladite extrémité de canalisation (1), ledit premier élément de fixation (2, 3) étant externe à ladite extrémité de canalisation (1),
- insertion d'une partie de l'élément de canalisation (6) entre le premier élément de fixation (2, 3) et l'extrémité de canalisation (1)
- connexion entre le premier élément de fixation (2, 3) et un deuxième élément de fixation (8) par des moyens de connexion (5), ledit deuxième élément de fixation (8) étant externe à ladite extrémité de canalisation (1), ledit premier élément de fixation (2, 3) et ledit deuxième élément de fixation (8) étant arrangés de sorte qu'une fois connectés par lesdits moyens de connexion (5), ils définissent un espace (10) arrangé pour recevoir ladite partie de l'élément de canalisation (6), ledit espace (10) comprenant une partie en forme de « L » réalisée par une première saillie (20) dudit premier élément de fixation (2) et par une deuxième saillie (80) dudit deuxième élément de fixation (8), ladite partie en forme de « L » (12) comprenant une première partie (121) et une deuxième partie (122) sensiblement perpendiculaire à la première partie (121),
- pliage de ladite partie de l'élément de canalisation (6) pour pouvoir être reçue dans ladite partie en forme de « L » (12).

13. Procédé selon la revendication précédente, comprenant l'étape suivante :
- insertion d'un joint (7) entre ladite partie de l'élément de canalisation (6) et le premier élément de fixation (2, 3).

14. Procédé selon l'une des revendications 12 ou 13, comprenant les étapes suivantes :
- insertion dudit élément de canalisation (6) dans un deuxième élément de canalisation (60),
- fixation dudit deuxième élément de canalisation (60) au premier et/ou au deuxième élément de fixation (2, 8) par un troisième élément de fixation (90, 92).

## Patentansprüche

1. System (100) zum Befestigen eines Rohrelements (6) an ein Rohrende (1), umfassend:
- das Rohrelement (6),
- das Rohrende (1),
- eine Vorrichtung (100) zum Befestigen des besagten Rohrelements (6) an das besagte Rohrende (1), wobei die besagte Vorrichtung (100) umfasst:
- ein erstes Befestigungselement (2, 3)
- ein zweites Befestigungselement (8)
- Mittel zum Verbinden (5) des ersten Befestigungselements (2, 3) mit dem zweiten Befestigungselement (8),
wobei das besagte erste Befestigungselement (2, 3) und das besagte zweite Befestigungselement (8) so angeordnet sind, dass sie, wenn sie einmal durch die besagten Verbindungsmittel (5) verbunden sind, einen Raum (10) definieren, der angeordnet ist, um einen Teil des Rohrelements (6) aufzunehmen, wobei der besagte Raum (10) so konfiguriert ist, dass der besagte Teil des Rohrelements (6) gefaltet werden muss, um im besagten Raum (10) aufgenommen zu werden,
wobei der besagte Raum (10) einen L-förmigen Teil (12) umfasst, welcher durch einen ersten Vorsprung (20) des besagten ersten Befestigungselements (2) und einen zweiten Vorsprung (80) des besagten zweiten Befestigungselements (8) ausgeführt ist, wobei der besagte Teil des Rohrelements (6) im besagten L-förmigen Teil (12) aufgenommen wird,
wobei der besagte L-förmige Teil (12) einen ersten Teil (121) und einen zweiten Teil (122), welcher im Wesentlichen senkrecht zum ersten Teil (121) ist, aufweist,
wobei das erste Befestigungselement (2, 3) und das zweite Befestigungselement (8) ausserhalb des besagten Rohrendes (1) liegen.

2. System gemäss Anspruch 1, wobei der besagte L-förmige Teil (12) derart konfiguriert ist, dass der besagte Teil des Rohrelements (6) in einem Winkel von im Wesentlichen gleich 90° gebogen werden muss, um im besagten L-förmigen Teil (12) aufgenommen zu werden, in Bezug auf den Teil des Rohrelements (6), der nicht in diesen L-förmigen Teil (12) eingeführt wird.

3. System gemäss einem der Ansprüche 1 bis 2, wobei das erste besagte Befestigungselement (2, 3) und das besagte zweite Befestigungselement (8) derart angeordnet sind, dass sie, sobald sie durch die besagten Verbindungsmittel (5) verbunden sind, auch einen Raum (14) definieren, der angeordnet ist, um eine Dichtung (7) aufzunehmen.

4. System gemäss Anspruch 3, mit einer im besagten Raum (14) aufgenommenen Dichtung (7.

5. System gemäss Anspruch3, wobei die besagte Dichtung (7) eine Dichtung vom Typ "O-Ring" ist.

6. System gemäss einem der Ansprüche 1 bis 5, wobei das besagte erste Befestigungselement zwei Halbflansche (2, 3) und Verbindungsmittel (4) der beiden Halbflansche (2, 3) aufweist.

7. System gemäss einem der Ansprüche 1 bis 6, wobei das zweite Befestigungselement (8) einen Ring aufweist.

8. System gemäss einem der Ansprüche 1 bis 7, wobei das besagte Rohrelement (6) ein Hauptrohrelement ist, wobei die besagte Vorrichtung ein zweites Rohrelement (60) aufweist, angeordnet um das besagte Hauptrohrelement (6) zu enthalten, so dass der Inhalt des besagten Hauptrohrelements (6), welcher möglicherweise aus dem besagten Hauptrohrelement (6) entweicht, im Raum (62) zwischen dem besagten Hauptrohrelement (6) und dem zweiten Rohrelement (60) eingeschlossen bleibt.

9. System gemäss dem vorhergehenden Anspruch, wobei das besagte zweite Rohrelement (60) flexibel und/oder durchsichtig ist.

10. System gemäss einem der Ansprüche 8 oder 9, wobei das besagte zweite Rohrelement (60) in Bezug auf mindestens ein seiner Enden mit einer Dichtung (70) verbunden, beispielsweise verschweisst, ist.

11. System gemäss einem der Ansprüche 8 bis 10, mit einem dritten Befestigungselement (90, 92) des besagten zweiten Rohrelements (60) am ersten und/oder zweiten Befestigungselement (2, 8).

12. Verfahren zum Befestigen eines Rohrelements (6) an einem Rohrende (1), um ein System gemäss Anspruch 1 aufzubauen, mit den folgenden Schritten:
- Verbinden eines ersten Befestigungselements (2, 3) mit dem besagten Rohrende (1), wobei das besagte erste Befestigungselement (2, 3) ausserhalb des besagten Rohrendes (1) liegt,
- Einführen eines Teils des Rohrelements (6) zwischen dem ersten Befestigungselement (2, 3) und dem Rohrende (1),
- Verbindung zwischen dem ersten Befestigungselement (2, 3) und einem zweiten Befestigungselement (8) durch Verbindungsmittel (5), wobei das besagte zweite Befestigungselement (8) ausserhalb des besagten Rohrendes (1) liegt, wobei das besagte erste Befestigungselement (2, 3) und das besagte zweite Befestigungselement (8) so angeordnet sind, dass sie, wenn sie einmal durch die besagten Verbindungsmittel (5) verbunden sind, einen Raum (10) definieren, der angeordnet ist, um einen Teil des Rohrelements (6) aufzunehmen, wobei der besagte Raum (10) einen L-förmigen Teil umfasst, welcher durch einen ersten Vorsprung (20) des besagten ersten Befestigungselements (2) und einen zweiten Vorsprung (80) des besagten zweiten Befestigungselements (8) ausgeführt ist, wobei der besagte L-förmige Teil (12) einen ersten Teil (121) und einen zweiten Teil (122), welcher im Wesentlichen senkrecht zum ersten Teil (121) ist, aufweist,
- Falten des besagten Teils des Rohrelements (6), um im besagten L-förmigen Teil (12) aufgenommen zu werden.

13. Verfahren gemäss dem vorhergehenden Anspruch, mit dem folgenden Schritt:
- Einsetzen einer Dichtung (7) zwischen dem besagten Teil des Rohrelements (6) und dem ersten Befestigungselement (2, 3).

14. Verfahren gemäss einem der Ansprüche 12 oder 13, mit den folgenden Schritten:
- Einführung des besagten Rohrelements (6) in ein zweites Rohrelement (60),
- Befestigung des besagten zweiten Rohrelements (60) am ersten und/oder am zweiten Befestigungselement (2, 8) mittels eines dritten Befestigungselements (90, 92).

## Claims

1. System for fastening a pipe element (6) to a pipe end (1), comprising:
- the pipe element (6),
- the pipe end (1),
- a device (100) for fastening said pipe element (6) to said pipe end (1), said device (100) comprising :
- a first fastening element (2, 3)
- a second fastening element (8)
- means (5) for connecting the first fastening element (2, 3) to the second fastening element (8)
said first fastening element (2, 3) and said second fastening element (8) being arranged such that when connected by said connecting means (5), they define a space (10) arranged to receive a portion of the pipe element (6), said space being (10) configured such that said portion of the pipe element (6) must be bent to be receivable in said space (10)
said space (10) comprising an "L"-shaped portion (12) formed by a first projection (20) of said first fastening element (2) and a second projection (80) of said second fastening element (8), said portion of the pipe member (6) being received in said "L"-shaped portion (12)
said "L"-shaped portion (12) comprising a first portion (121) and a second portion (122) substantially perpendicular to the first portion (121),
the first fastening element (2, 3) and the second fastening element (8) being external to said pipe end (1).

2. System according to claim 1, said "L"-shaped portion (12) being configured such that said portion of the pipe element (6) must be bent at an angle substantially equal to 90° to be received in said "L"-shaped portion (12), with respect to the portion of the pipe element (6) that is not inserted in this "L"-shaped portion (12).

3. System according to one of claims 1 to 2, said first fastening element (2, 3) and said second fastening element (8) being arranged so that when connected by said connecting means (5), they also define a space (14) arranged to receive a seal (7).

4. System according to claim 3, comprising a seal (7) received in said space (14).

5. System according to claim 4, said seal (7) being an "O-Ring" seal.

6. System according to one of claims 1 to 5, said first fastening element comprising two half flanges (2, 3) and connecting means (4) for connecting the two half flanges (2, 3).

7. System according to one of claims 1 to 6, said second fastening element (8) comprising a ring.

8. System according to one of claims 1 to 7, said pipe element (6) being a main pipe element, said device comprising a second pipe element (60) arranged to contain said main pipe element (6), so that the contents of said main pipe element (6) which may escape from said main pipe element (6) remain confined in the space (62) between said main pipe element (6) and the second pipe element (60).

9. System according to the previous claim, said second pipe element (60) being flexible and/or transparent.

10. System according to one of claims 8 or 9, said second pipe element (60) being connected, for example welded, in correspondence of at least one of its ends to a joint (70).

11. System according to one of claims 8 to 10, comprising a third fastening element (90, 92) of said second pipe element (60) to the first and/or second fastening element (2, 8).

12. Method of fastening a pipe element (6) to a pipe end (1) for assembling a system according to claim 1, comprising the following steps:
- connection of a first fastening element (2, 3) to said pipe end (1), said first fastening element (2, 3) being external to said pipe end (1),
- insertion of a portion of the pipe element (6) between the first fastening element (2, 3) and the pipe end (1)
- connection between the first fastening element (2, 3) and a second fastening element (8) by connection means (5), said second fastening element (8) being external to said pipe end (1),
said first fastening element (2, 3) and said second fastening element (8) being arranged so that when connected by said connecting means (5), they define a space (10) arranged to receive said portion of the pipe element (6), said space (10) comprising an "L"-shaped portion formed by a first projection (20) of said first fastener (2) and a second projection (80) of said second fastener (8), said "L"-shaped portion (12) comprising a first portion (121) and a second portion (122) substantially perpendicular to the first portion (121),
- bending said portion of the pipe element (6) to be received in said "L" shaped portion (12).

13. Method according to the previous claim, comprising the following step:
- insertion of a seal (7) between said portion of the pipe element (6) and the first fastening element (2, 3).

14. Method according to one of claims 12 or 13, comprising the following steps:
- insertion of said pipe element (6) into a second pipe element (60),
- fastening said second pipe element (60) to the first and/or second fastening element (2, 8) by a third fastening element (90, 92).
